(19) Europäisches Patentamt
European Patent Office
Office européen des brevets

(11) **EP 4 679 221 A1**

(12) **EUROPEAN PATENT APPLICATION**
published in accordance with Art. 153(4) EPC

(43) Date of publication:
**14.01.2026 Bulletin 2026/03**

(21) Application number: **23926963.2**

(22) Date of filing: **16.06.2023**

(51) International Patent Classification (IPC):
*G05D 23/00* (2006.01)    *G01J 11/00* (2006.01)
*H01S 5/024* (2006.01)    *G01J 5/00* (2022.01)

(86) International application number:
**PCT/CN2023/100660**

(87) International publication number:
**WO 2024/187616 (19.09.2024 Gazette 2024/38)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **10.03.2023 CN 202310246798**

(71) Applicant: **Quantumctek Co., Ltd.**
**Hefei, Anhui 230088 (CN)**

(72) Inventors:
• **FANG, Yuqiang**
**Hefei, Anhui 230088 (CN)**
• **JIANG, Lianjun**
**Hefei, Anhui 230088 (CN)**
• **HUANG, Chuancheng**
**Hefei, Anhui 230088 (CN)**
• **MA, Rui**
**Hefei, Anhui 230088 (CN)**
• **LIU, Ming**
**Hefei, Anhui 230088 (CN)**
• **TANG, Shibiao**
**Hefei, Anhui 230088 (CN)**

(74) Representative: **Detken, Andreas**
**Isler & Pedrazzini AG**
**Giesshübelstrasse 45**
**Postfach 1772**
**8027 Zürich (CH)**

(54) **SINGLE-PHOTON DETECTOR COOLING CONTROL METHOD AND SYSTEM ADAPTIVE TO TEMPERATURE AND TEC PERFORMANCE CHANGE**

(57)    Disclosed in the present invention is a single-photon detector cooling control method and system adaptive to temperature and TEC performance changes. The method limits the maximum working voltage of a TEC, monitors in real time a working voltage and a cooling temperature of the TEC, and automatically adjusts a target temperature and an APD working bias voltage according to a monitoring result, so as to effectively guarantee that the single-photon detector can still work stably when the working environment temperature is too high or the TEC performance is degraded. Meanwhile, when the environment temperature recovers to a normal temperature range, the present invention allows a cooling target temperature of the TEC to be recovered to an initial cooling target temperature, and synchronously adjusts the APD working bias voltage, so that the performance indexes of the single-photon detector, such as the detection efficiency, the dark count rate, the afterpulse probability, are synchronously recovered to a normal state, thus effectively prolonging the service life of TECs and single-photon detector devices, and improving the environmental adaptability of single-photon detectors.

**FIG. 2**

## Description

The present application claims the priority to Chinese Patent Application No. 202310246798.7, titled "SINGLE-PHOTON DETECTOR COOLING CONTROL METHOD AND SYSTEM ADAPTIVE TO TEMPERATURE AND TEC PERFORMANCE CHANGE", filed on March 10, 2023 with the China National Intellectual Property Administration, which is incorporated herein by reference in its entirety.

## FIELD

The present disclosure relates to the field of single-photon detectors, in particular to a cooling control method and system for a single-photon detector, which is adaptive to ambient temperature variation and TEC performance degradation.

## BACKGROUND

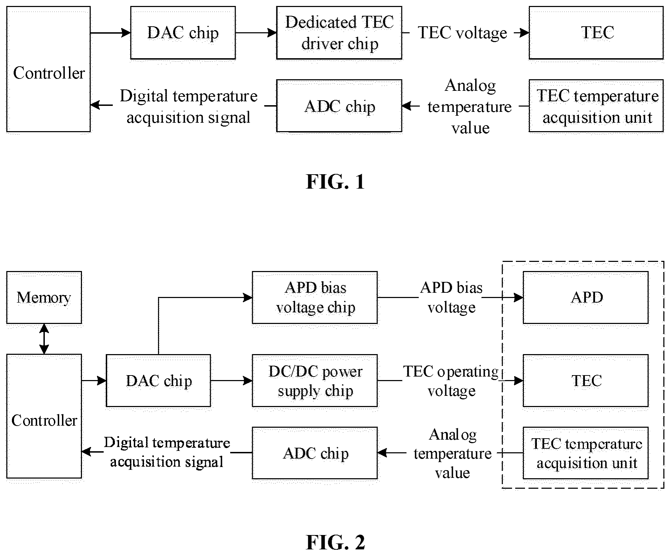

In existing single-photon detectors, a commonly used cooling control process of a TEC (thermoelectric cooler) is as follows: a controller controls a DAC chip to supply a control voltage for a dedicated TEC driver chip, to regulate a magnitude or direction of an output voltage of the dedicated TEC driver chip, realizing cooling or heating by the TEC. During this control process, a temperature is acquired by an ADC chip to regulate the temperature of the single-photon detector, as shown in FIG. 1. Some dedicated TEC driver chips control a target temperature through external resistors configuration and further achieve temperature stabilization using PID regulation through a resistance-capacitance value, which further simplifies the external driving circuit of the TEC controller and provides a high level of integration.

Patent document CN111258351A discloses a TEC temperature control solution for a single-photon detector. In this control solution, a DAC chip outputs a voltage V_DAC to a temperature control circuit based on a DAC digital signal control value; the voltage V_DAC is divided by electronic elements in the temperature control circuit and then is coupled by a capacitor bank, to apply voltages V_TEC_P and V_TEC_N to two voltage input terminals of a TEC for regulating a cooling temperature of the TEC. An upper limit of current or voltage is regulated by means of a power supply chip or a resistance value obtained through a combination of resistors. Additionally, temperatures of the single-photon detector module controlled by the TEC and PID parameters are stored in a memory, and the temperature control algorithm of the TEC is embedded in a main control unit. As a result, a TEC driver chip for cooling is no longer required, and issues such as insufficient voltage or current output of the TEC chip and poor consistency in parameters of existing TEC hardware platforms are addressed. Furthermore, unified parameter configuration, flexible hardware circuit design, and effective cost reduction are achieved.

However, no voltage protection for the TEC device is provided in the prior art. When the TEC device operates near its rated voltage for a long time, the service life of the TEC device will be reduced. Moreover, how to achieve cooling control when the temperature difference between the ambient environment and the target cooling temperature exceeds a maximum cooling temperature difference of the TEC is not provided in the prior art. In scenarios where the ambient temperature is too high or the TEC performance for the detector degrades, the temperature difference between the ambient temperature and the target cooling temperature will exceed the maximum cooling temperature difference of the TEC. As a result, the TEC fails to cool an APD (avalanche photodiode) to a target temperature, and performance parameters related to the temperature such as detection efficiency, dark count rate, and afterpulse probability will fluctuate, thereby affecting the overall performance of the single-photon detector. Meanwhile, in this condition, the TEC device will operate in an extreme cooling operating state for a long period in order to reach the target temperature, which will lead to a degradation in the performance and reliability of the TEC device over time.

## SUMMARY

To address the aforementioned issues in the prior art, a cooling control method and a cooling control system for a single-photon detector adaptive to temperature and TEC performance variations are provided according to the present disclosure, in which a maximum operating voltage of the TEC is limited, a TEC operating voltage and a cooling temperature are monitored in a real time manner, and the target temperature of the TEC and the APD bias voltage are automatically regulated based on the monitored results, effectively ensuring the stable operation of the single-photon detector even under a condition of excessively high ambient temperature or TEC performance degradation. In addition, when the ambient temperature returns to the normal range, the target cooling temperature of the TEC can be restored to the initial target cooling temperature, and the APD bias voltage is accordingly regulated, so that the performance parameters of the single-photon detector, such as detection efficiency, dark count rate, and afterpulse probability are restored to their respective normal states. Thus, the service lives of both the TEC device and the single-photon detector can be effectively prolonged, and the environmental adaptability of the single-photon detector can be improved.

Specifically, a cooling control method for a single-photon detector adaptive to temperature and TEC performance variations is provided according to a first aspect of the present disclosure, and the cooling control method includes:

presetting an upper limit of an operating voltage and a specified minimum voltage for a TEC;

increasing a target temperature and an APD bias voltage in response to a cooling temperature of the TEC failing to reach the target temperature within a specified time period or the operating voltage of the TEC at the target temperature being greater than the upper limit; and

decreasing the APD bias voltage and the target temperature in response to the operating voltage of the TEC at the target temperature being less than the specified minimum voltage.

In an embodiment, the upper limit of the operating voltage is set to 70% of a rated operating voltage of the TEC.

In an embodiment, the cooling control method for a single-photon detector includes an initialization step, an adaptive temperature increase step, a specified maximum voltage monitoring step, a specified minimum voltage monitoring step, an adaptive temperature decrease step, and a cooling temperature monitoring step.

The initialization step includes setting the target temperature as an initial target temperature, setting the APD bias voltage as an initial APD bias voltage upon power-on; determining whether the cooling temperature of the TEC reaches the target temperature within the specified time period, and determining, in response to the cooling temperature reaching the target temperature within the specified time period, whether the operating voltage of the TEC at the target temperature is greater than a specified maximum voltage, where the specified maximum voltage is set to be lower than the upper limit of the operating voltage; performing the adaptive temperature increase step in response to the cooling temperature of the TEC failing to reach the target temperature within the specified time period or the operating voltage of the TEC at the target temperature is greater than the specified maximum voltage; and continuing, in response to the cooling temperature of the TEC reaching the target temperature within the specified time period or the operating voltage of the TEC at the target temperature being less than or equal to the specified maximum voltage, the determining whether the operating voltage of the TEC at the target temperature is greater than the specified maximum voltage.

The adaptive temperature increase step includes updating the target temperature by increasing the target temperature; increasing the APD bias voltage after the cooling temperature reaches the target temperature; and performing the specified maximum voltage monitoring step.

The specified maximum voltage monitoring step includes determining whether the operating voltage of the TEC at the target temperature is greater than the specified maximum voltage; performing the adaptive temperature increase step in response to the operating voltage of the TEC at the target temperature being greater than the specified maximum voltage; and performing the specified minimum voltage monitoring step in response to the operating voltage of the TEC at the target temperature being less than or equal to the specified maximum voltage.

The specified minimum voltage monitoring step includes determining whether the operating voltage of the TEC at the target temperature is less than a specified minimum voltage, and performing the adaptive temperature decrease step in response to the operating voltage of the TEC at the target temperature being less than the specified minimum voltage.

The adaptive temperature decrease step includes updating the target temperature by decreasing the target temperature, decreasing the APD bias voltage before the cooling temperature reaches the target temperature, and performing the cooling temperature monitoring step.

The cooling temperature monitoring step includes determining whether the cooling temperature of the TEC reaches the target temperature within the specified time period, and performing the adaptive temperature increase step in response to the cooling temperature of the TEC failing to reach the target temperature within the specified time period.

In an embodiment, the initialization step further includes setting an initial value for a flag; and the cooling control method further includes:

determining, in response to determining that the operating voltage of the TEC at the target temperature is greater than or equal to the specified minimum voltage in the specified minimum voltage monitoring step, whether a value of the flag is the initial value; performing a recovering operating voltage monitoring step in response to the value of the flag being the initial value; and performing the specified maximum voltage monitoring step in response to the value of the flag being not the initial value;

the recovering operating voltage monitoring step includes determining whether the operating voltage of the TEC at the target temperature is less than a recovering operating voltage; performing the specified maximum voltage monitoring step in response to the operating voltage of the TEC at the target temperature being greater than or equal to the recovering operating voltage; setting the flag as a value different from the initial value and performing the adaptive temperature decrease step, in response to the operating voltage of the TEC at the target temperature being less than the recovering operating voltage; and resetting the flag as the initial value in response to the cooling temperature of the TEC reaching the target temperature within the specified time period; where

the recovering operating voltage is a sum of the specified minimum voltage and a preset redundant voltage.

In an embodiment, the cooling control method for a single-photon detector according to the present disclosure further includes: determining whether the target temperature is equal to the initial target temperature in response to the cooling temperature of the TEC reaching the target temperature within the specified time period in the cooling temperature monitoring step;

determining, in response to the target temperature being equal to the initial target temperature, whether the operating voltage of the TEC at the target temperature is greater than the specified maximum voltage; performing the adaptive temperature increase step in response to the operating voltage of the TEC at the target temperature being greater than the specified maximum voltage; and continuing, in response to the operating voltage of the TEC at the target temperature being less than or equal to the specified maximum voltage, the determining whether the operating voltage at the target temperature is greater than the specified maximum voltage; and

performing, in response to the target temperature being unequal to the initial target temperature, the specified maximum voltage monitoring step.

In an embodiment, the cooling control method for a single-photon detector according to the present disclosure further includes prompting an anomaly in response to the target temperature being unequal to an initial target temperature.

In an embodiment, the operating voltage of the TEC at the target temperature is determined when the cooling temperature stably reaches the target temperature.

In an embodiment, the cooling control method for a single-photon detector according to the present disclosure further includes: calculating a regulated amount of the APD bias voltage based on a regulated amount of the target temperature by using an APD avalanche breakdown voltage-temperature coefficient factor $a$, where a difference between the APD bias voltage and an avalanche breakdown voltage is constant.

A cooling control system for a single-photon detector adaptive to temperature and TEC performance variations is provided according to a second aspect of the present disclosure, and includes: a temperature sensing module, a control module, and a TEC; where

the TEC is configured to cool an APD;

the temperature sensing module is configured to acquire a real-time cooling temperature of the TEC and send the real-time cooling temperature of the TEC to the control module; and

the control module is configured to regulate a target temperature of the TEC and an APD bias voltage applied to the APD based on the cooling control method for a single-photon detector described above.

In an embodiment, the temperature sensing module includes a TEC temperature acquisition unit and an ADC unit. The TEC temperature acquisition unit is configured to acquire the real-time cooling temperature of the TEC and output an analog temperature value. The ADC unit is configured to convert the analog temperature value into a digital temperature acquisition signal and send the digital temperature acquisition signal to the control module.

In an embodiment, the control module includes a storage unit, a control unit, a DAC unit, an APD bias voltage unit, and a DC/DC power supply.

The storage unit is configured to store an initial target temperature and an initial APD bias voltage.

The control unit is configured to determine the target temperature and the APD bias voltage based on the cooling control method for a single-photon detector described above; generate a digital control signal for a TEC operating voltage based on the target temperature and the real-time cooling temperature of the TEC, and generate a digital control signal for the APD bias voltage based on the APD bias voltage.

The DAC unit is configured to convert the digital control signal for the TEC operating voltage into an analog control signal for the TEC operating voltage, and convert the digital control signal for the APD bias voltage into an analog control signal for the APD bias voltage.

The DC/DC power supply is configured to supply an operating voltage for the TEC based on the analog control signal for the TEC operating voltage.

The APD bias voltage unit is configured to supply a bias voltage for the APD based on the analog control signal for the APD bias voltage.

In an embodiment, the storage unit is further configured to store PID parameters; and the control unit is further configured to generate the digital control signal for the TEC operating voltage based on the target temperature and the real-time cooling temperature of the TEC by using a PID algorithm.

In an embodiment, a maximum output voltage of the DC/DC power supply is configured as the upper limit of the operating voltage for the TEC by means of a resistor network; and/or, the digital control signal for the TEC operating voltage is in a form of a DAC code value.

## BRIEF DESCRIPTION OF THE DRAWINGS

The embodiments of the present disclosure are described in detail below in conjunction with the drawings.

For more clearly illustrating technical solutions in embodiments of the present disclosure or in the prior art, the drawings to be used in the embodiments or the prior art are briefly described hereinafter. Apparently, the drawings in the following description only show some embodiments of the present disclosure, and other drawings may be obtained by those skilled in the art based on the provided drawings without any creative efforts.

FIG. 1 schematically shows a TEC cooling control solution for a single-photon detector in the prior art;

FIG. 2 shows an example of a cooling control system for a single-photon detector adaptive to temperature and TEC performance variations according to the present disclosure;

FIG. 3 shows an example of a cooling control method for a single-photon detector adaptive to temperature and TEC performance variations according to the present disclosure; and

FIG. 4 shows a flowchart of processing a temperature anomaly signal in the cooling control method for a single-photon detector adaptive to temperature and TEC performance variations according to the present disclosure.

**DETAILED DESCRIPTION**

Hereinafter, exemplary embodiments of the present disclosure are described in detail with reference to the drawings. The following embodiments are provided in a manner of example, to fully convey the spirit of the present disclosure to those skilled in the art to which the present disclosure pertains. Therefore, the present disclosure is not limited to the embodiments disclosed herein.

FIG. 2 shows an example of a cooling control system for a single-photon detector adaptive to temperature and TEC performance variations according to the present disclosure.

The cooling control system for a single-photon detector adaptive to temperature and TEC performance variations may include a TEC, a temperature sensing module and a control module.

It is known by those skilled in the art that APD is a core optoelectronic device in the single-photon detector, and operates in a Geiger mode in which a reverse bias voltage exceeds an avalanche breakdown voltage. Typically, a TEC provides cooing for the APD to suppress dark count. The TEC may be a semiconductor cooler made by utilizing Peltier effect of semiconductor materials.

In order to achieve cooling control, a real-time cooling temperature of the TEC is acquired by means of the temperature sensing module, and is sent to the control module for performing cooling control based on the real-time cooling temperature.

As shown in FIG. 2, the temperature sensing module may include a TEC temperature acquisition unit and an ADC unit, where the TEC temperature acquisition unit is configured to acquire the real-time cooling temperature of the TEC and output an analog temperature value; and the ADC unit is configured to convert the analog temperature value into a digital temperature acquisition signal and send the digital temperature acquisition signal to the control module.

As an example, the TEC temperature acquisition unit may acquire, by means of a thermistor in a resistive voltage division manner, a real-time temperature at the APD, that is, the real-time cooling temperature of the TEC.

As an example, the ADC unit may be implemented by an ADC chip.

In the present disclosure, in addition to controlling the TEC to achieve a target (cooling) temperature of the TEC and applying a bias voltage corresponding to the target temperature to the APD, the control module may further adaptively regulate the target temperature of the TEC and an APD bias voltage based on a variation in an ambient temperature and a degradation condition of the TEC performance, preventing the TEC from operating at a full load for a long time, and ensuring the stable performance of the single-photon detector under a condition that the ambient temperature varies (too high) or the TEC performance degrades.

As shown in FIG. 2, the control module may include a storage unit, a control unit, a DAC unit, an APD bias voltage unit, and a DC/DC power supply. The storage unit may be implemented in the form of a memory, and the control unit may be implemented in the form of a controller. The DAC unit, the APD bias voltage unit, and the DC/DC power supply each may be implemented in the form of a chip.

In the present disclosure, for example, an APD cooling temperature and an APD bias voltage are configured by factory, and are acquired and stored in advance in the storage unit as an initial target temperature of the TEC and an initial APD bias voltage, respectively. Furthermore, PID parameters may be stored in advance in the storage unit if the target temperature of the TEC is regulated by means of a PID algorithm.

Therefore, when the device is powered on, the control unit may read the initial target temperature and the initial APD bias voltage from the storage unit as a current (real-time) target temperature and a current APD bias voltage, respectively, and read the PID parameters for the subsequent PID control process.

When acquiring the current target temperature and acquiring, based on the digital temperature acquisition signal from the ADC unit, the real-time cooling temperature of the TEC, the control unit may generate, based on the current target temperature and the real-time cooling temperature, a digital control signal for a TEC operating voltage by using the corresponding PID algorithm, and send the digital control signal to the DAC unit. The DAC unit may control, based on the received digital control signal, the DC/DC power supply to output a corresponding operating voltage to the TEC, and finally the real-time cooling temperature of the TEC can stably reach the target temperature, thereby achieving the control process of the current target temperature.

As an example, the digital control signal for the TEC operating voltage outputted by the control unit may be in the form of a DAC code value (code value), and the DAC code value and the TEC operating voltage are in one-to-one correspondence. Therefore, when the real-time cooling temperature of the TEC stably reaches the target temperature, the TEC operating voltage regulated by the PID algorithm in the control unit is also a stable value, that is, the DAC code value outputted by the control unit is also a stable value (or a value fluctuating in a small range). Therefore, the control unit may calculate the current TEC operating voltage based on the current DAC code value, so as to determine the current cooling power (operating state) of the TEC.

For example, the DAC code value ranges from 0 to 65535. A smaller code value indicates that the DC/DC power supply outputs a higher TEC operating voltage to the TEC. The DAC code value corresponding to the target temperature (that is, the initial target temperature) is 20000 under a normal condition where the factory-calibrated configuration parameters are used and both the cooling temperature and TEC operating state are stable. As the TEC operates over time, its performance may degrade. Therefore, with other conditions unchanged, the DAC code value may decrease (for example, to 10000) for stably cooling to a same target temperature, indicating that the TEC needs to operate at a higher operating voltage. Alternatively, a cooling temperature difference of the TEC increases as the ambient temperature increases, and thus cooling power needs to be increased in order to stably cool to the same target temperature. In this case, the DAC code value for stably cooling to the same target temperature also decreases (for example, to 10000), also indicating that the TEC needs to operate at a higher operating voltage. Therefore, in the present disclosure, using the DAC code value facilitates monitoring a variation in an ambient temperature and a degradation condition of the TEC performance. For example, an anomaly may be detected in response to the DAC code value falling below a preset threshold, and the anomaly status may be reported to a host computer or indicated via a hardware indicator as needed.

As described above, the control unit according to the present disclosure is further configured to adaptively regulate the target temperature of the TEC and the APD bias voltage based on a variation in the ambient temperature and the degradation condition of the TEC performance, so as to prevent the TEC from operating at a full load for a long time, and to ensure stable performance of the single-photon detector under a condition that the ambient temperature varies (too high) or the TEC performance degrades.

In view of this, an upper limit of the operating voltage for the TEC may be preset to prevent the TEC from operating at the full load for a long time. Therefore, the control unit may increase the target temperature when the cooling temperature of the TEC fails to reach the target temperature within a specified time period or when the TEC operating voltage at the target temperature is greater than the upper limit of the operating voltage, and decrease the target temperature when the operating voltage of the TEC at the target temperature is less than a specified minimum voltage, so as to adaptively regulate the target temperature of the TEC based on the variation in the ambient temperature and the degradation condition of the TEC performance.

As an example, a maximum output voltage of the DC/DC power supply for supplying an operating voltage for the TEC is limited, by a resistor network in the form of hardware, as the upper limit of the operating voltage. Preferably, the upper limit of the operating voltage may be set to 70% of a rated operating voltage of the TEC.

Furthermore, in order to ensure stable performance of the single-photon detector, the control unit may calculate, while regulating the target temperature, an APD bias voltage corresponding to a regulated target temperature based on a linear relationship between an APD avalanche breakdown voltage and a temperature, so as to maintain, for example, a constant difference between the bias voltage applied to the APD and a current avalanche breakdown voltage.

Assuming that the control unit regulates the target temperature with a step size $T_{level}$,

$T_{target\_1}$ represents the current target temperature, $T_{real}$ represents the real-time cooling temperature of the TEC, $V_{bias\_1}$ represents the APD bias voltage corresponding to the current target temperature, and $a$ represents an avalanche breakdown voltage-temperature coefficient factor.

When determining that the current target temperature is to be increased, the control unit may calculate the regulated target temperature as

$$T_{target\_change} = \left( \frac{T_{real}}{T_{level}} + 1 \right) * T_{level}$$, where $\frac{T_{real}}{T_{level}}$ represents round down to a nearest integer.

Subsequently, the control unit further calculates the APD bias voltage $V_{bias\_change} = V_{bias\_1} + a * \Delta T_{target}$ corresponding to the regulated target temperature $T_{target\_change}$, where $\Delta T_{target} = T_{target\_change} - T_{target\_1}$.

Therefore, the control unit may control the cooling temperature of the TEC to stably reach the target temperature $T_{target\_change}$ by using the PID algorithm, and control the APD bias voltage unit to apply the APD bias voltage $V_{bias\_change}$ to the APD after the cooling temperature of the TEC reaches the target temperature $T_{target\_change}$.

Similarly, when determining that the current target temperature is to be decreased, the control unit may calculate the regulated target temperature $T_{target\_change} = T_{target\_1} - T_{level}$.

Subsequently, the control unit further calculates the APD bias voltage $V_{bias\_change} = V_{bias\_1} - a * T_{level}$ corresponding to the regulated target temperature $T_{target\_change}$.

In this condition, different from the temperature increase process, the control unit first controls the APD bias voltage unit to apply the APD bias voltage $V_{bias\_change}$ to the APD, and then controls the cooling temperature of the TEC to stably reach the target temperature $T_{target\_change}$ by using the PID algorithm, thereby providing necessary protection for the APD during adaptive temperature decrease.

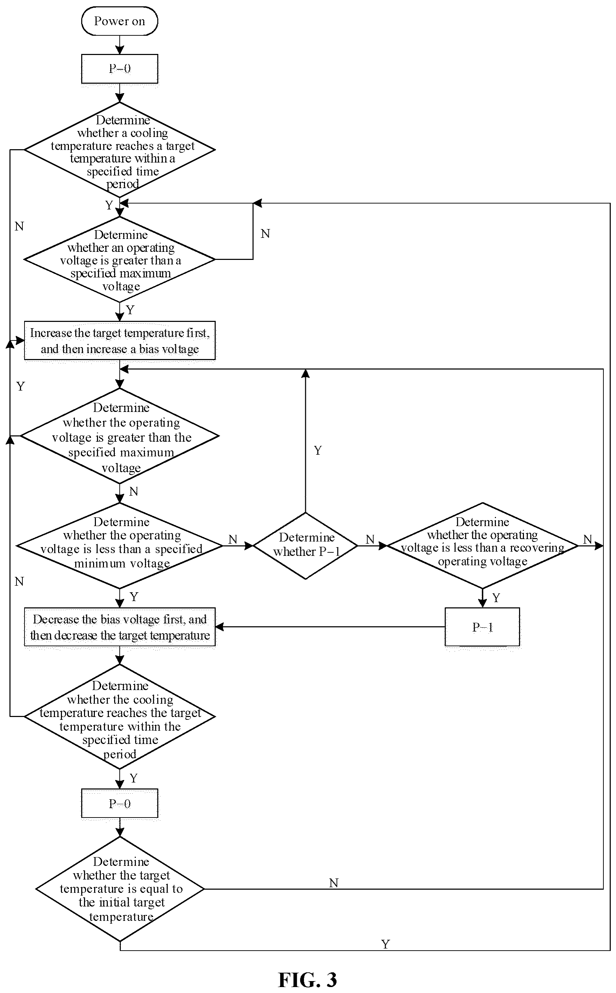

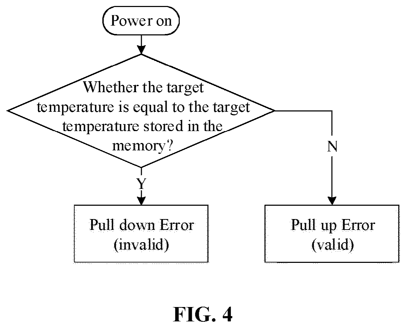

To facilitate a better understanding of the operation principle of the present disclosure (especially the control unit), a cooling control method for a single-photon detector adaptive to temperature and TEC performance variations is described in detail with reference to FIG. 3 and FIG. 4 hereinafter.

As shown in FIG. 3, the cooling control method for a single-photon detector according to the present disclosure may include an initialization step, an adaptive temperature increase step, a specified maximum voltage monitoring step, a specified minimum voltage monitoring step, an adaptive temperature decrease step, and a cooling temperature monitoring step.

In the initialization step (for example, startup at power on), the control unit may read, from a storage unit, the initial target temperature $T_{target}$ and the initial APD bias voltage $V_{bias}$, and set a current target temperature with the value of $T_{target}$ and set a current APD bias voltage with the value of $V_{bias}$. In addition, the control unit may further set a flag P with an initial value (for example, P=0).

Therefore, the control unit may control the cooling temperature of the TEC to reach the target temperature by using the PID algorithm, and determine whether the cooling temperature of the TEC reaches the target temperature within a specified time period.

If the cooling temperature of the TEC reaches the target temperature within the specified time period, it may further be determined whether the operating voltage of the TEC is greater than a specified maximum voltage when the cooling temperature stably reaches the target temperature. The specified maximum voltage may be set to be slightly lower than the upper limit of the operating voltage of the TEC, which facilitates achieving a required cooling state more stably.

If the cooling temperature of the TEC fails to reach the target temperature within the specified time period or the operating voltage of the TEC at the target temperature is greater than the specified maximum voltage, the target temperature may be increased through the adaptive temperature increase step to reduce the working intensity of the TEC and maintain stable operation of the single-photon detector.

If the cooling temperature of the TEC reaches the target temperature within the specified time period and the operating voltage of the TEC at the target temperature is less than or equal to the specified maximum voltage, the current operating state of the TEC may be maintained, and the operating voltage of the TEC at the target temperature may be continuously monitored to determine whether the operating voltage is greater than the specified maximum voltage, so as to continuously monitor a variation in ambient temperature and/or the degradation condition of the TEC performance.

In the adaptive temperature increase step, the control unit may, for example, increase the target temperature by a step size $T_{level}$ to update the target temperature, and calculate an APD bias voltage corresponding to the updated target temperature. For example,

$$T_{target\_change} = \left( \frac{T_{real}}{T_{level}} + 1 \right) * T_{level} \qquad \text{and}$$

$V_{bias\_change} = V_{bias\_1} + a * \Delta T_{target}$ are calculated as previously described. After controlling the cooling temperature of the TEC to reach the updated target temperature (for example, by using the PID algorithm), the control unit controls the APD bias voltage unit to apply the APD bias voltage corresponding to the updated target temperature to the APD. Subsequently, the control unit begins to perform the specified maximum voltage monitoring step.

In the specified maximum voltage monitoring step, the control unit may determine whether the operating voltage of the TEC at the target temperature is greater than the specified maximum voltage. If the operating voltage of the TEC at the target temperature is greater than the specified maximum voltage, the adaptive temperature increase step is performed to further increase the target temperature. If the operating voltage of the TEC at the target temperature is less than or equal to the specified maximum voltage, the specified minimum voltage monitoring step may be performed.

In the specified minimum voltage monitoring step, the control unit may determine whether the operating voltage of the TEC at the target temperature is less than the specified minimum voltage. If the operating voltage of the TEC at the target temperature is less than the specified minimum voltage, the adaptive temperature decrease step is performed to decrease the target temperature.

In the adaptive temperature decrease step, the control unit may also decrease the target temperature by a step size $T_{level}$ to update the target temperature, and calculate an APD bias voltage corresponding to the updated target temperature. For example, $T_{target\_change} = T_{target\_1} - T_{level}$ and $V_{bias\_change} = V_{bias\_1} - a * T_{level}$ are calculated as previously described. Different from the temperature increase process, after calculating the decreased target temperature and the APD bias voltage corresponding to the decreased target temperature, the control unit first controls the APD bias voltage unit to apply the updated APD bias voltage to the APD, and then controls (for example, using the PID algorithm) the cooling temperature of the TEC to reach the updated target temperature, thereby providing protection for the APD during the temperature decrease process and avoiding the risk of breakdown caused by excessive voltage on the APD.

If, in the specified minimum voltage monitoring step, it is determined that the operating voltage of the TEC at the target temperature is greater than or equal to the specified minimum voltage, the control unit may determine whether the flag P is an initial value (for example, by checking whether P is a non-initial value such as 1). If the flag P is another value (for example, P=1), the specified maximum voltage monitoring step is performed.

If the flag P is the initial value (P=0), the recovering operating voltage monitoring step is initiated to determine whether the operating voltage of the TEC at the target temperature is less than a recovering operating voltage.

If the operating voltage of the TEC at the target temperature is greater than or equal to the recovering operating voltage, the specified maximum voltage monitoring step is performed. If the operating voltage of the TEC at the target temperature is less than the recovering operating voltage, the flag P is set to another value (P=1), and the adaptive temperature decrease step is performed. When the cooling temperature of the TEC reaches the target temperature (as calculated by the adaptive temperature decrease step) within the specified time period, the flag P is reset to the initial value (P=0).

In the present disclosure, configuration of the specified minimum voltage enables the target temperature of the TEC to be further decreased when an operating voltage of the TEC is less than the specified minimum voltage, and due to inevitable individual differences among TEC devices, target temperatures of some TEC devices may further be decreased even when their operating voltages are greater than or equal to the specified minimum voltage. Therefore, in the present disclosure, the recovering operating voltage is obtained by adding a redundant voltage to the specified minimum voltage as a final voltage for determining whether to decrease the target temperature. Thus, in the recovering operating voltage monitoring step, a target temperature decrease attempt is made when the TEC operating voltage is less than the recovering operating voltage, and is greater than or equal to the specified minimum voltage. If the target temperature decrease attempt is successful, the flag P is reset to the initial value (P=0) and the same operation is performed when the next time the same condition occurs. If the target temperature decrease attempt fails, the flag P is maintained at another value (P=1) and the determination is skipped when the next time the same condition occurs, which enables the method and system according to the present disclosure to identify variations between different batches of TEC devices with minimal computational resources, thereby maximizing the utilization of the cooling performance of the TEC devices within a reasonable range.

After the target temperature is decreased through the adaptive temperature decrease step, the control unit may perform the cooling temperature monitoring step to determine whether the cooling temperature of the TEC reaches the target temperature within the specified time period. If the cooling temperature of the TEC reaches the target temperature within the specified time period, the flag P is reset to the initial value (P=0). If the cooling temperature of the TEC does not reach the target temperature within the specified time period, the adaptive temperature increase step is performed to increase the target temperature.

Referring to FIG. 3, after the target temperature is decreased through the adaptive temperature decrease step, the control unit may further determine whether the target temperature is equal to the initial target temperature.

If it is determined that the target temperature is equal to the initial target temperature, the control unit continues to determine whether the operating voltage of the TEC at the target temperature is greater than the specified maximum voltage; performs the adaptive temperature increase step in a case that the operating voltage of the TEC at the target temperature is greater than the specified maximum voltage; and continues to determine whether the operating voltage of the TEC at the target temperature is greater than the specified maximum voltage in a case that the operating voltage of the TEC at the target temperature is less than or equal to the specified maximum voltage.

If it is determined that the target temperature is unequal to the initial target temperature, the specified maximum voltage monitoring step is performed, and the method goes to determine whether to perform the adaptive temperature decrease step.

Thus, by continuously performing the aforementioned control process during operation, the control unit is able to adaptively regulate the target (cooling) temperature and the APD bias voltage under a condition that the ambient temperature varies and the TEC performance degrades, thereby maintaining the stable operating state of the detector.

As shown in FIG. 4, the control unit may further pull up a temperature anomaly signal Error upon detecting that the target temperature differs from the (initial) target temperature stored in the storage unit, thereby prompting the user to maintain an ambient temperature suitable for device operation or to check the operating state of the TEC device, providing an anomaly prompt.

Furthermore, those skilled in the art readily understand that when the TEC operating voltage is acquired, it is first determined whether the TEC operating voltage is stable within a certain time period (since, if the PID parameters are improperly set, the TEC operating voltage may continuously oscillate for a long time), so as to avoid sampling unstable operating voltages for determination, thereby ensuring the precise implementation of the cooling control method.

In summary, in the cooling control method and system for the single-photon detector adaptive to ambient temperature variation and TEC performance degradation according to the present disclosure, the maximum operating voltage of the TEC is limited (for example, the maximum output voltage of the power supply of the TEC is configured by a resistor network in hardware as 70% of the rated operating voltage of the TEC). The TEC operating voltage and the cooling temperature are monitored in a real time manner, and the target temperature of the TEC and the APD bias voltage are automatically regulated based on the monitored results (for example, increasing the target cooling temperature of the TEC and regulating the APD bias voltage when the ambient temperature is too high or the TEC performance degrades), maintaining the operating voltage of the APD unchanged (that is, a difference between the APD bias voltage and the avalanche breakdown voltage is constant) when the cooling temperature varies, thereby maintaining stable detection efficiency of the single-photon detector. While partially sacrificing the dark count performance of the detector, the method optimizes afterpulse parameters and guarantees stable operation of the single-photon detector even under the condition of excessively high operating environment temperature or TEC performance degradation. When the ambient temperature returns to the normal range, the target (cooling) temperature of the TEC can be automatically restored to the initial target cooling temperature (that is, the initial target temperature) stored in the memory (for example, Flash), and the APD bias voltage is accordingly regulated, so that the performance parameters of the single-photon detector, such as detection efficiency, dark count rate, and afterpulse probability are restored to their respective normal states. Thus, the TEC device can be protected, the service lives of both the TEC device and the single-photon detector can be prolonged, and the environmental adaptability of the single-photon detector can be improved. As a result, under extreme conditions such as excessively high ambient temperature or TEC performance degradation, the single-photon detector can maintain stable operation by sacrificing only a portion of the dark count performance.

Although the present disclosure has been described above through specific embodiments in conjunction with the drawings, those skilled in the art can easily recognize that the above-mentioned embodiments are only exemplary and are used to illustrate the principles of the present disclosure, rather than limiting the scope of the present disclosure. Those skilled in the art can make various combinations, modifications, and equivalent substitutions to the above-mentioned embodiments without departing from the spirit and scope of the present disclosure.

## Claims

1. A cooling control method for a single-photon detector adaptive to temperature and TEC performance variations, comprising:

   presetting an upper limit of an operating voltage and a specified minimum voltage for a TEC; increasing a target temperature and an APD bias voltage in response to a cooling temperature of the TEC failing to reach the target temperature within a specified time period or the operating voltage of the TEC at the target temperature being greater than the upper limit; and decreasing the APD bias voltage and the target temperature in response to the operating voltage of the TEC at the target temperature being less than the specified minimum voltage.

2. The cooling control method for a single-photon detector according to claim 1, wherein the upper limit of the operating voltage is set to 70% of a rated operating voltage of the TEC.

3. The cooling control method for a single-photon detector according to claim 1, comprising an initialization step, an adaptive temperature increase step, a specified maximum voltage monitoring step, a specified minimum voltage monitoring step, an adaptive temperature decrease step, and a cooling temperature monitoring step; wherein

   the initialization step comprises: setting the target temperature as an initial target temperature, setting the APD bias voltage as an initial APD bias voltage upon power-on; determining whether the cooling temperature of the TEC reaches the target temperature within the specified time period, and determining, in response to the cooling temperature reaching the target temperature within the specified time period, whether the operating voltage of the TEC at the target temperature is greater than a specified maximum voltage, wherein the specified maximum voltage is set to be lower than the upper limit of the operating voltage; performing the adaptive temperature increase step in response to the cooling temperature of the TEC failing to reach the target temperature within the specified time period or the operating voltage of the TEC at the target temperature is greater than the specified maximum voltage; and continuing, in response to the cooling temperature of the TEC reaching the target temperature within the specified time period or the operating voltage of the TEC at the target temperature being less than or equal to the specified maximum voltage, the determining whether the operating voltage of the TEC at the target temperature is greater than the specified maximum voltage;

the adaptive temperature increase step comprises: updating the target temperature by increasing the target temperature; increasing the APD bias voltage after the cooling temperature reaches the target temperature; and performing the specified maximum voltage monitoring step;

the specified maximum voltage monitoring step comprises: determining whether the operating voltage of the TEC at the target temperature is greater than the specified maximum voltage; performing the adaptive temperature increase step in response to the operating voltage of the TEC at the target temperature being greater than the specified maximum voltage; and performing the specified minimum voltage monitoring step in response to the operating voltage of the TEC at the target temperature being less than or equal to the specified maximum voltage;

the specified minimum voltage monitoring step comprises: determining whether the operating voltage of the TEC at the target temperature is less than a specified minimum voltage, and performing the adaptive temperature decrease step in response to the operating voltage of the TEC at the target temperature being less than the specified minimum voltage;

the adaptive temperature decrease step comprises: updating the target temperature by decreasing the target temperature, decreasing the APD bias voltage before the cooling temperature reaches the target temperature, and performing the cooling temperature monitoring step; and

the cooling temperature monitoring step comprises: determining whether the cooling temperature of the TEC reaches the target temperature within the specified time period, and performing the adaptive temperature increase step in response to the cooling temperature of the TEC failing to reach the target temperature within the specified time period.

4. The cooling control method for a single-photon detector according to claim 3, wherein the initialization step further comprises setting an initial value for a flag; and the cooling control method further comprises:

determining, in response to determining that the operating voltage of the TEC at the target temperature is greater than or equal to the specified minimum voltage in the specified minimum voltage monitoring step, whether a value of the flag is the initial value; performing a recovering operating voltage monitoring step in response to the value of the flag being the initial value; and performing the specified maximum voltage monitoring step in response to the value of the flag being not the initial value;

the recovering operating voltage monitoring step comprises: determining whether the operating voltage of the TEC at the target temperature is less than a recovering operating voltage; performing the specified maximum voltage monitoring step in response to the operating voltage of the TEC at the target temperature being greater than or equal to the recovering operating voltage; setting the flag as a value different from the initial value and executing the adaptive temperature decrease step, in response to the operating voltage of the TEC at the target temperature being less than the recovering operating voltage, and resetting the flag as the initial value in response to the cooling temperature of the TEC reaching the target temperature within the specified time period; wherein

the recovering operating voltage is a sum of the specified minimum voltage and a preset redundant voltage.

5. The cooling control method for a single-photon detector according to claim 3 or 4, further comprising:

determining whether the target temperature is equal to the initial target temperature in response to the cooling temperature of the TEC reaching the target temperature within the specified time period in the cooling temperature monitoring step;

determining, in response to the target temperature being equal to the initial target temperature, whether the operating voltage of the TEC at the target temperature is greater than the specified maximum voltage; performing the adaptive temperature increase step in response to the operating voltage of the TEC at the target temperature being greater than the specified maximum voltage; and continuing, in response to the operating voltage of the TEC at the target temperature being less than or equal to the specified maximum voltage, the determining whether the operating voltage of the TEC at the target temperature is greater than the specified maximum voltage; and

performing, in response to the target temperature being unequal to the initial target temperature, the specified maximum voltage monitoring step.

6. The cooling control method for a single-photon detector according to claim 1, further comprising prompting an anomaly in response to the target temperature being unequal to an initial target temperature.

7. The cooling control method for a single-photon detector according to claim 1, wherein the operating voltage of the TEC at the target temperature is determined when the cooling temperature stably reaches the target temperature.

8. The cooling control method for a single-photon detector according to claim 1, further comprising: calculating a regulated amount of the APD bias voltage based on a regulated amount of the target temperature by using an APD avalanche breakdown voltage-temperature coefficient factor $a$, wherein a difference between the APD bias voltage and an avalanche breakdown voltage is constant.

9. A cooling control system for a single-photon detector adaptive to temperature and TEC performance variations, comprising: a temperature sensing module, a control module, and a TEC, wherein

the TEC is configured to cool an APD;
the temperature sensing module is configured to acquire a real-time cooling temperature of the TEC and send the real-time cooling temperature of the TEC to the control module; and
the control module is configured to regulate a target temperature of the TEC and an APD bias voltage applied to the APD based on the cooling control method for a single-photon detector according to any one of claims 1 to 8.

10. The cooling control system for a single-photon detector according to claim 9, wherein the temperature sensing module comprises a TEC temperature acquisition unit and an ADC unit, wherein

the TEC temperature acquisition unit is configured to acquire the real-time cooling temperature of the TEC and output an analog temperature value; and
the ADC unit is configured to convert the analog temperature value into a digital temperature acquisition signal and send the digital temperature acquisition signal to the control module.

11. The cooling control system for a single-photon detector according to claim 9, wherein the control module comprises a storage unit, a control unit, a DAC unit, an APD bias voltage unit, and a DC/DC power supply, wherein

the storage unit is configured to store an initial target temperature and an initial APD bias voltage;
the control unit is configured to: determine the target temperature and the APD bias voltage based on the cooling control method for a single-photon detector according to any one of claims 1 to 8; generate a digital control signal for a TEC operating voltage based on the target temperature and the real-time cooling temperature of the TEC; and generate a digital control signal for the APD bias voltage based on the APD bias voltage;
the DAC unit is configured to: convert the digital control signal for the TEC operating voltage into an analog control signal for the TEC operating voltage, and convert the digital control signal for the APD bias voltage into an analog control signal for the APD bias voltage;
the DC/DC power supply is configured to supply an operating voltage for the TEC based on the analog control signal for the TEC operating voltage; and
the APD bias voltage unit is configured to supply a bias voltage for the APD based on the analog control signal for the APD bias voltage.

12. The cooling control system for a single-photon detector according to claim 11, wherein

the storage unit is further configured to store PID parameters; and
the control unit is further configured to generate the digital control signal for the TEC operating voltage based on the target temperature and the real-time cooling temperature of the TEC by using a PID algorithm.

13. The cooling control system for a single-photon detector according to claim 11, wherein

a maximum output voltage of the DC/DC power supply is configured as the upper limit of the operating voltage for the TEC by means of a resistor network; and/or
the digital control signal for the TEC operating voltage is in a form of a DAC code value.

FIG. 1

FIG. 2

```
                    ┌─────────────┐
                    │  Power on   │
                    └──────┬──────┘
                           │
                    ┌──────┴──────┐
                    │     P=0      │
                    └──────┬──────┘
                           │
                    ╱──────┴──────╲
                   ╱  Determine    ╲
                  ╱ whether a cooling╲
          N      ╱ temperature reaches a╲
        ◄───────  target temperature within
                  ╲  a specified time  ╱
                   ╲    period       ╱
                    ╲──────┬──────╱
                           │ Y
                    ╱──────┴──────╲
                   ╱  Determine    ╲       N
                  ╱ whether an operating╲ ◄──────
                   whether an operating
                  ╲ voltage is greater than╱
                   ╲ a specified maximum  ╱
                    ╲   voltage         ╱
                    ╲──────┬──────╱
                           │ Y
              ┌────────────┴────────────┐
              │ Increase the target     │
              │ temperature first, and  │
              │ then increase a bias    │
              │ voltage                 │
              └────────────┬────────────┘
```

FIG. 3

FIG. 4

## INTERNATIONAL SEARCH REPORT

| | International application No. |
|---|---|
| | **PCT/CN2023/100660** |

**A. CLASSIFICATION OF SUBJECT MATTER**

G05D23/00(2006.01)i; G01J11/00(2006.01)i; H01S5/024(2006.01)i; G01J5/00(2022.01)i

According to International Patent Classification (IPC) or to both national classification and IPC

**B. FIELDS SEARCHED**

Minimum documentation searched (classification system followed by classification symbols)

IPC:G05D23/-、G01J11/-、H01S5/、G01J5/-; CPC:G02B2006/12135

Documentation searched other than minimum documentation to the extent that such documents are included in the fields searched

Electronic data base consulted during the international search (name of data base and, where practicable, search terms used)

CNTXT, ENTXT, ENTXTC, VEN, CNKI: 科大国盾量子, 中国科学技术大学, 半导体制冷, 热电制冷, 玻尔帖, 冷却, 温度, (雪崩 or 倍增) 3w 二极管, 单光子, 偏压, 偏置电压, 盖革, TEC, thermoelectric cooler, temperature, peltier, APD, avalanche photodiodes, single photon, voltage

**C. DOCUMENTS CONSIDERED TO BE RELEVANT**

| Category* | Citation of document, with indication, where appropriate, of the relevant passages | Relevant to claim No. |
|---|---|---|
| A | CN 103674288 A (EAST CHINA NORMAL UNIVERSITY) 26 March 2014 (2014-03-26) description, paragraphs 0006-0008 | 1-13 |
| A | CN 103606804 A (ACCELINK TECHNOLOGIES CO., LTD. et al.) 26 February 2014 (2014-02-26) entire document | 1-13 |
| A | CN 105628014 A (SHANGHAI TRUELAND INFORMATION AND TECHNOLOGY CO., LTD.) 01 June 2016 (2016-06-01) entire document | 1-13 |
| A | CN 110109494 A (DONGGUAN MENTECH OPTICAL & MAGNETIC CO., LTD.) 09 August 2019 (2019-08-09) entire document | 1-13 |
| A | CN 110554371 A (SUZHOU JIUWU UNION INTELLIGENT TECHNOLOGY CO., LTD.) 10 December 2019 (2019-12-10) entire document | 1-13 |

☑ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **14 November 2023** | **15 November 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2023/100660** |

**C.    DOCUMENTS CONSIDERED TO BE RELEVANT**

| Category* | Citation of document, with indication, where appropriate, of the relevant passages | Relevant to claim No. |
| --- | --- | --- |
| A | CN 115542976 A (WUHAN HUAGONG GENUINE OPTICS TECH CO., LTD.) 30 December 2022 (2022-12-30)<br>    entire document | 1-13 |
| A | CN 211454386 U (GUOKAI QIKE QUANTUM TECHNOLOGY (BEIJING) CO., LTD.) 08 September 2020 (2020-09-08)<br>    entire document | 1-13 |
| A | JP 2005057537 A (SUMITOMO ELECTRIC INDUSTRIES, LTD.) 03 March 2005 (2005-03-03)<br>    entire document | 1-13 |

Form PCT/ISA/210 (second sheet) (July 2022)

**INTERNATIONAL SEARCH REPORT**
Information on patent family members

International application No.

**PCT/CN2023/100660**

| Patent document cited in search report | | | Publication date (day/month/year) | Patent family member(s) | | | Publication date (day/month/year) |
|---|---|---|---|---|---|---|---|
| CN | 103674288 | A | 26 March 2014 | None | | | |
| CN | 103606804 | A | 26 February 2014 | None | | | |
| CN | 105628014 | A | 01 June 2016 | None | | | |
| CN | 110109494 | A | 09 August 2019 | None | | | |
| CN | 110554371 | A | 10 December 2019 | None | | | |
| CN | 115542976 | A | 30 December 2022 | None | | | |
| CN | 211454386 | U | 08 September 2020 | None | | | |
| JP | 2005057537 | A | 03 March 2005 | US | 2005109041 | A1 | 26 May 2005 |
| | | | | US | 7124592 | B2 | 24 October 2006 |
| | | | | JP | 4433720 | B2 | 17 March 2010 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310246798

- CN 111258351 A